# EUROPEAN PATENT APPLICATION

(11) **EP 1 259 026 A1**
(43) Date of publication of application: **20.11.2002**
(21) Application number: 01401241.3
(22) Date of filing: 15.05.2001
(51) Int. Cl.: H04L 12/18, H04L 29/06

(54) **Method and device for managing mobile nodes**

(71) Applicant: MOTOROLA, INC., Schaumburg, IL 60196 (US)
(72) Inventor: Ernst, Thierry, 38000 Grenoble (FR); Castelluccia, Claude, 38190 Bernin (FR)
(74) Representative: Litchfield, Laura Marie

(57) **Abstract**

A method of mobility management in a data packet network employs list-based multi-casting for distributing a careof address of a mobile node (5) in the form of a binding update. The binding update, which includes a list of recipient correspondent nodes (2, 3,4) is forwarded sequentially to each correspondent node in the list by routers (6, 7) which duplicate the binding update whenever an interface towards a subsequent hop diverges. The method is a particularly efficient in terms of signalling overhead in cases where between two and ten correspondent nodes are involved.

## Description

The present invention relates, in general, to mobility management in communications networks comprising mobile nodes and a plurality of correspondent nodes and has particular applicability to an Internet environment. A "node" can be a user terminal, a router or a network, for example.

The Internet comprises a large number of interconnected communications networks. In topological terms, the internet comprises a large number of nodes which can communicate with each other. It is sometimes desirable for a mobile node to connect to the Internet to communicate with other nodes in the internet. A node with which the mobile node communicates is known as a correspondent node. In practice, the mobile node has a number of correspondent nodes. The mobile node can be located in any number of modes of transport, for example; a train, a boat, an aircraft or a car. Alternatively, the mobile node may correspond to a moving human being in a personal area network. An embodiment of a mobile node is a user terminal such as a personal computer.

As is implied by the word "mobile", the mobile node is not limited to a single topological point of attachment to the Internet. Instead, the mobile node can move between and connect to a number of topological points of attachment to the Internet. The mobile node is identified by a home address, the home address corresponding to an internet protocol address on a home link. The home link is a communications link with a router known as a home agent, the home link corresponding to an initial topological point of attachment to the internet; a link with a router located at a topological point of attachment other than the initial topological point of attachment is known as a foreign link. Alternatively a home address can comprise a global identifier, not necessarily associated with a home link or home agent.

When the mobile node migrates from the initial topological point of attachment to the Internet to the foreign link, one of a number of access routers on the foreign link assigns a careof address to the mobile node. The careof address is an Internet protocol address identifying the current topological point of attachment of the mobile node to the Internet.

Subsequent movements of the mobile node to other foreign links result in the allocation of respective new careof addresses. The mobile node registers its current careof address with the home agent so that the home agent can re-direct datagrams addressed to the home address to the mobile node's new location. In order to maintain continuous connectivity between a correspondent node and the mobile node, mobility management is required.

The mobile-IPv4, the mobile-IPv4-with route optimisation and the mobile-IPv6 protocols devised by the mobile-internet protocol working group of the internet engineering task force (IEPF) are designed to manage the mobility of the mobile node.

Under the mobile-IPv4 protocol, correspondent nodes are not aware of the careof address of the mobile node. Consequently, all traffic destined for the mobile node is routed via the home agent, the home agent re-directing traffic destined for the mobile node to the current topological point of attachment of the mobile node to the foreign network using the careof address corresponding to the internet protocol address of the router on the foreign link, known as the foreign agent in the mobile-lPv4 protocol.

Under the mobile-Ipv4 protocol-with route optimisation, the careof address of the mobile node is sent by the home agent to all the correspondent nodes of the mobile node, thereby ensuring that all traffic destined for the mobile node is sent by an optimal path between the correspondent nodes and the mobile node.

Instead of the home agent communicating the careof address to the correspondent nodes of the mobile node, the mobile-IPv6 protocol requires the careof address of the mobile node to be sent by the mobile node itself to the correspondent nodes of the mobile node, again thereby ensuring that all traffic destined for the mobile node is sent by the optimal path between the correspondent nodes and the mobile node.

In the cases of mobile-IPv4-with route optimization and mobile-IPv6, the careof address is communicated to the correspondent nodes of the mobile node by means of a message known as a "binding update". Under the mobile-IPv4 with route optimisation and the mobile-IPv4 protocols, binding updates need to be periodically sent to each correspondent node of the mobile node.

The mobile-IPv4 protocol is clearly inefficient in terms of routing, due to the triangular nature of the route taken by any data destined for the mobile node when the mobile node is connected to a foreign link. The mobile-IPv4 protocol with route optimisation and the mobile-IPv6 protocol, whilst being reasonably in routing terms, begin to be inefficient in terms of signaling costs and bandwidth use when the number of correspondent nodes of the mobile node becomes large. As the number of correspondent nodes increases, the number of binding updates corresponding by the increases. Hence, for a large number of correspondent nodes of the mobile node, a risk exists of overloading the internet with signaling messages, ie. a binding update explosion.

Applicant's co-pending European Patent Application EP 0040144.1 and conference proceedings ECUMN '00, Colmar, France, October 2-4, 2000 "Extending mobile IPv6 with multicast to support mobile networks in IPv6" by Thierry Ernst, Claude Castellucia and Hong-Yon Lach discloses a method of mitigating the binding update explosion effect by sending binding updates to a multi-cast address instead of to individual correspondent nodes.

The concept of multi-cast in general, is a means of minimising bandwidth use by sending only one copy of a message to a particular link, several recipients being reachable by the link. Hence, the aim of multi-cast is to avoid duplicate information flowing on the same link.

Typically, a multi-casting method has the following properties;
1) A group of nodes is identified by a single address (group address),
2) Group members are unknown to the source,
3) A multi-cast routing protocol is responsive for group membership management and distribution tree establishment,
4) Data packets are sent to the group address,
5) Routers are responsible for duplicating a data packet wherever the next hop to distinct group members diverges.

The use of multi-cast to send binding updates requires a multi-cast routing protocol in order to establish and maintain a distribution tree. However, due to the signaling cost for doing so, it is an inefficient solution in the case of a mobile node communicating with a small number of correspondent nodes (say 10 or less).

The present invention proposes the use of a list-based multi-cast technique for the distribution of binding updates, such a technique being particularly useful where a small number of correspondent nodes are involved (say 2 to 10).

The general principle of a list-based multi-cast technique is to record the list of recipients of a data packet in the data packet itself. This is in contrast with the multi-cast technique mentioned above where the data packet (or binding update) is sent to a group address which identifies all the recipients. Hence, in a list-based multi-cast approach, there is no notion for a group address or group membership. Further, there is no requirement for a multi-cast routing protocol.

The list of recipients may be carried using a new IPv6 extension header or option

A list-based multi-casting method has the following properties:
1) Group members are known to the source,
2) A list of group members are self-contained in a transmitted data packet,
3) Routers are responsible for duplicating the data packet whenever a next hop to distinct recipients diverges.

According to a further aspect of the present invention, there is provided a method of mobility management in a communications network including the steps of; communicating a careof address of a mobile node to a plurality of recipient correspondent nodes, in which the step of communicating includes transmitting a data packet which includes the careof address and a list of recipient correspondent nodes to a first of said recipient correspondent nodes and thereon sequentially to the remaining recipient correspondent nodes in the list.

The addresses of recipients included in the list may be compacted to minimize the packet size.

The sequential transmission from one recipient correspondent node to the next may be facilitated by routers which check the next hop towards each recipient correspondent node contained in the packet. If the interface towards the next hop diverges, then the packet is duplicated by the router.

Hence, according to another aspect of the present invention, there is provided a router for implementing a list-based multi-cast distribution of a data packet in a communications network to a plurality of recipient nodes, wherein the data packet includes a list of the recipient nodes, the router having means for receiving the data packet, means for transmitting the packet to a first recipient node included in said list, means for duplicating the data packet and means for transmitting the duplicated data packet to a second recipient node included in said list.

In a preferred embodiment of the router in accordance with the invention, the data packet includes a careof address of a mobile node of the communications network. The careof address may be in the form of a binding update.

The data packet including the careof address may originate from the mobile node, or alternatively, may originate from a home agent associated with the mobile node.

According to a further aspect of the present invention, there is provided a communications node capable of communicating with at least one of a plurality of correspondent nodes, the communications node including means for obtaining a careof address relating to a current location of a mobile node, means for compiling a list of addresses of the plurality of correspondent nodes, means for creating a binding update message comprising the careof address and said list of addresses, and means for transmitting the binding update message to one of the correspondent nodes whose address is included in said list of addresses.

The addresses in the list may be ordered by the node for better efficiency in terms of processing delay in the routers.

The communications node may be the mobile node itself, which may comprise a user terminal.

Alternatively, the communications node may be a home agent.

Hence, the invention allows the transmission of a single periodic binding update to a mobile node's correspondent nodes. The binding update includes a list of recipients (ie. the correspondent nodes) in addition to the binding between its home address and careof address. Intermediate routers may be used in order to duplicate the binding update whenever all list members cannot be reached by the same next hop. The invention has the advantage of a reduced signaling overhead as it avoids duplication of information flowing over the same link.

The complete list of correspondent nodes comprising the communications network may be split into several shorter lists for reasons of confidentiality, for example. Further, a communications node may be provided with the facility for splitting the list into several lists to be transmitted in distinct binding updates.

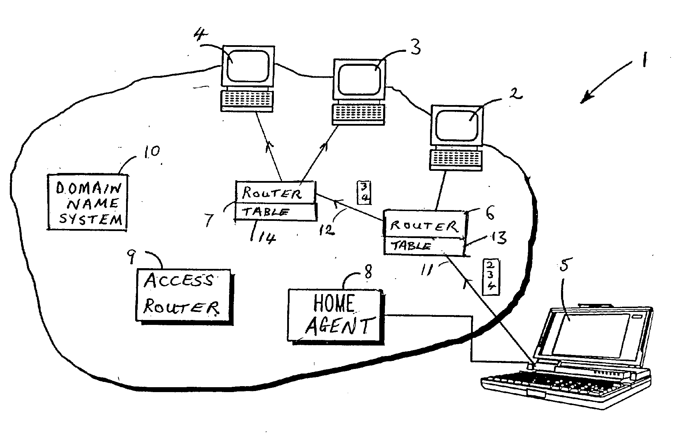

An embodiment of the invention will now be described, by way of example only, with reference to the drawing which is a schematic diagram of a communications network operating in accordance with the invention.

In the Figure, a communications network comprises a packet switched network 1, for example, the internet having an internet protocol topology. The network 1 includes a plurality of correspondent nodes 2, 3, 4 capable of communicating with a mobile node 5. In this example, the mobile node 5 is a personal computer. Communications between the mobile node 5 and the correspondent nodes 2, 3,4 is by way of routers 6 and 7 and a home agent 8.

The mobile node 5 is initially located at home link at a first location which constitutes an initial topological point of attachment to the network 1. Each of the plurality of correspondent nodes 2, 3, 4 includes a binding cache for storing relationships between internet protocol addresses.

The mobile node 5 is permanently identified by a home address ie. a permanent identifier corresponding to the initial topological point of attachment to the network 1. The network 1 also has an access router 9 located at a second location remote from the first location and constituting a second topological point of attachment to the network 1.

The first and/or second topological points of attachment are not limited to the provision of a fixed physical connection or link and can include any known form of coupling available, for example, a wireless communications link such as a radio frequency link.

The network 1 also comprises a domain name system 10 for recording bindings between domain names and internet protocol addresses. Specifically, the domain name system 10 stores the home address of the mobile node 5 and is accessible to each correspondent node 2, 3, 4.

Routers 6 and 7 incorporate routing tables 13 and 14 respectively.
In operation, the mobile node 5 is initially located at the first location and is capable of corresponding with at least one of the plurality of correspondent nodes 2, 3, 4 by exchanging data in the form of datagrams.

Prior to communication establishment between any one of the correspondent nodes 2, 3, 4 and the mobile node 5, each correspondent node 2, 3 ,4 calls the domain name system 10 for the internet protocol address corresponding to the home address of the mobile node. The domain name system 10 returns the home address to the correspondent nodes 2, 3, 4. Each correspondent node 2, 3,4 can then begin communicating with the mobile node 5 via the home address.

Upon relocation of the mobile node 5 to the second location, the mobile node 5 interfaces with the access router 9 and obtains a careof address from the access router 9. It then notifies the home agent 8 of its new (careof) address. When a correspondent node 2, 3, 4 sends a message to the mobile node 5, the message comprising either a datagram or a request for its current address, the message is re-directed by the home agent 8 to the mobile node's new (second) location. The mobile node 5, on receiving the message, includes the identity of each correspondent node that sent the message in an address list. Subsequently, by means of an update function, the mobile node 5 periodically sends the careof address in the form of a binding update message to each correspondent node included in the list. It does this by including in the binding update message, the address list of all the correspondent nodes which have sent it a message via the home agent 8, and then transmitting the composite message to router 6 along link 11. The router 6 notes the list of recipients and consequently transmits the received binding update to the correspondent node 2, duplicates the binding update, includes the address list of the remaining recipients (correspondent nodes 3 and 4) and forwards the resulting composite message onto the router 7 along the link 12. The router 7 receives the message, transmits the binding update to the correspondent node 3, duplicates the binding update and transmits the duplicate to correspondent node 4.

Hence, the new careof address is distributed to all correspondent nodes in an efficient manner. The correspondent nodes are then able to send datagrams directly to the mobile node 5 at its careof address.

In alternative embodiment, the home gateway 8 receives the careof address directly from either the mobile node 5 or the access router 9 and similarly compiles an address list of correspondent nodes 2, 3, 4. The home gateway 8 then includes the address list and the careof address in a binding update message and transmits the message to router 6 for subsequent delivery as described above.

Subsequent movement of the mobile node 5 to another location will result in the allocation of a new careof address to the mobile node 5. Consequently, subsequent binding updates are sent by the mobile node 5 (or the home gateway 8) to each correspondent node 2, 3,4 as described above.

When a correspondent node 2, 3, 4 sends a message to the mobile node 5, the message comprising either a datagram or a request for its current address, the message is re-directed by the home agent 8 to the mobile node's new (second) location. The mobile node 5, on receiving the message, includes the identity of each correspondent node that sent the message in an address list.

In the preferred embodiment, the binding update message is compiled as follows. Firstly a new option to the mobile IPv6 binding update is defined (currently in Mobile IPv6, Binding Updates are messages that contain an IPv6 header and a Binding Update Option extension header. In addition, they may contain a Home Option extension header, and other not yet specified options).

For the purpose of List Based Multicast, the new option contains the list of correspondent nodes (their IPv6 addresses).

The format of the Binding Update Option is shown below

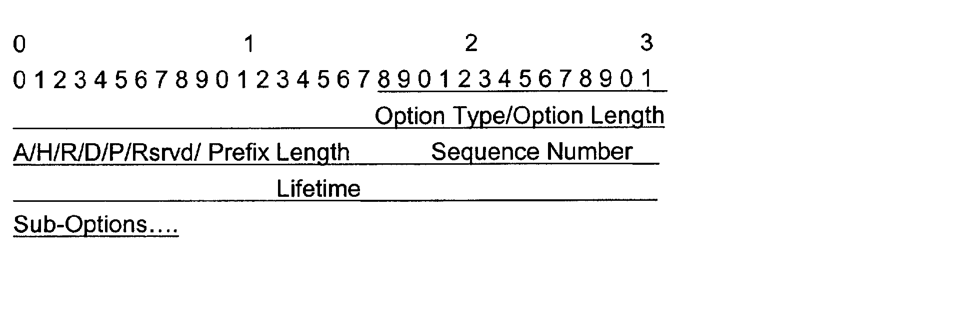

The list of correspondent nodes (their addresses) is carried using the following option format:

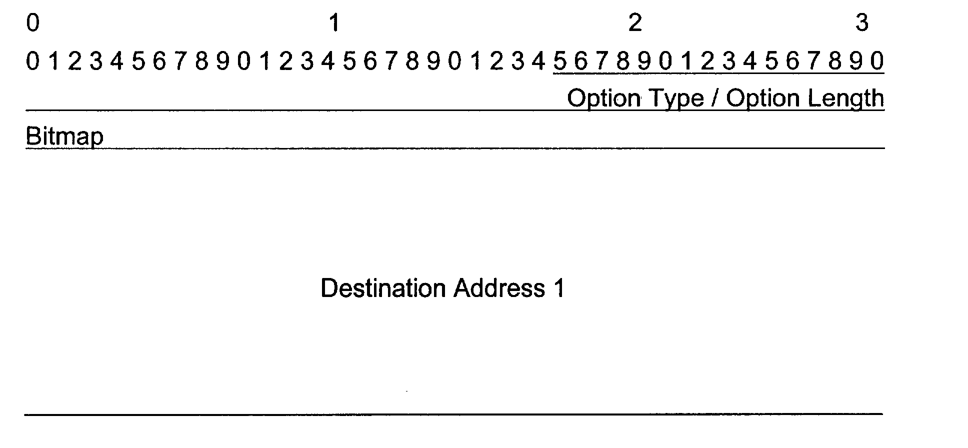

Each IPv6 option has an identifier ie "option type"

The **Option Length** is the total number of bytes for this option: 32 bits for the bitmap plus 128 bits for each recorded address.

The **Bitmap** is 32 bits. Each rank corresponds to an address recorded in the following field. This indicates which addresses carried by this option still remain undelivered. For instance, if the first bit and third bit are set to one, then this indicates that only the first and third addresses remain undelivered. All other addresses do not need to be processed.

The **Destination address** is an array containing the IPv6 address of a correspondent node. Each address is 128 bits long. There are as many addresses as specified by the Option Length Field.

For list-based Mutlicast option processing, the Option Length field gives the number of addresses which are recorded in the option. The Bitmap field relates to those addresses which still need to be processed.

A router 6, 7 implementing the list-based mutlicast option operates as follows.

For each bit set to 1 in the bitmap, it reads the corresponding address. It then interrogates a routing table, stored in the router, for ascertaining the next hop towards this address.

If the next hop differs from the one specified in the destination address field in the IPv6 header, it duplicates the packet comprising the binding update. This results in a number of duplicate packets. There are as many duplicate packets as there are distinct next hops towards the destinations from the given router.

In each duplicated packet, the router sets the bitmap. All bits set to 1 in the bitmap correspond to addresses that are reachable via the same next hop. The destination address of the packet is set to one of the addresses for which the next hop is the same. The router sends each duplicate packet towards its corresponding next hop. A packet with all bits in the bitmap set to 0 means that no duplication is required anymore.

To keep network processing to a minimum, it is preferable to implement the option in only well-located routers like border routers. Routing is nearly optimal, and there is not much processing overhead.

The same List Based Multicast option may be used for the mobility management of an entire network. In this situation, the Binding Update option contains a binding between the mobile node's home address and its care-of address. The Binding Update has a prefix scope and the binding is valid for a set of addresses that share a common prefix, not for a single address.

The mobile router may split the list of all the correspondent into several List Based Multicast Lists. It may decide to split the correspondent according to any local policy. Such a policy could be based on the prefix of the correspondent's addresses.

## Claims

1. A method of distributing binding updates in a communications network (1) by means of list-based multi-casting.

2. A method according to Claim 1 in which the binding update contains an IPv6 header and an option having an address list recorded therein.

3. A method of mobility management in a communications network (1) including the steps of: communicating a careof address of a mobile node (5) to a plurality of recipient correspondent nodes (2, 3, 4), in which the step of communicating includes transmitting a data packet which includes the careof address and an address list of recipient correspondent nodes to a first of said recipient correspondent nodes (2) and thereon sequentially to the remaining recipient correspondent nodes (3, 4) in the list.

4. A router (6, 7) for implementing a list-based multi-cast distribution of a data packet in a communications network (1) to a plurality of recipient nodes (2, 3, 4), wherein the data packet includes an address list of the recipient nodes, the router (6, 7) having means for receiving the data packet, means for transmitting the data packet to a first recipient node (2) included in said list, means for duplicating the data packet and means for transmitting the duplicated data packet to a second recipient node (3) included in said list.

5. A router according to Claim 4 in which the data packet includes a careof address of a mobile node (5) of the communications network (1).

6. A router (6, 7) according to Claim 5 in which the careof address is in the form of a binding update.

7. A router according to any of claims 4 to 6 and including a routing table (13), adapted to compare a first address stored in the routing table with a second address of a recipient node included in the list, and in which the router (6, 7) is adapted to duplicate the data packet if the first address differs from the second address, and to set a bitmap corresponding to addresses reachable via the second address.

8. A communications node (5) capable of communicating with at least one of a plurality of corresponding nodes (2, 3, 4) and including means for obtaining a careof address relating to a current location of a mobile node (5), means for compiling a list of addresses of the plurality of correspondent nodes (2, 3, 4), means for creating a binding update message comprising the careof address and said list of addresses, and means for transmitting the binding update message to one of the correspondent nodes (2) whose address is included in said list of addresses.

9. A communications node (5) according to claim 6 in which the communications node is a mobile node (5).

10. A communications node according to Claim 6 in which the communications node is a home agent (8).
